# EUROPEAN PATENT SPECIFICATION

(11) **EP 4 229 383 B1**
(45) Date of publication and mention of the grant of the patent: **26.11.2025**
(21) Application number: 21790977.9
(22) Date of filing: 14.10.2021
(51) Int. Cl.: G01M 3/32

(54) **LEAK TESTING**
LECKPRÜFUNG
TEST DE FUITE

(30) Priority: 14.10.2020 GB 202016265
(43) Date of publication of application: 23.08.2023
(73) Proprietor: Vacuum Engineering Services Ltd., Manchester M32 0ZE (GB)
(72) Inventor: SANSBY, Luke, Manchester Greater Manchester M32 0ZE (GB); WHITTLE, Andrea, Manchester Greater Manchester M32 0ZE (GB)
(74) Representative: Marks & Clerk LLP
(86) International application number: PCT/GB2021/052660
(87) International publication number: WO 2022/079437

(56) References cited:
- WO-A1-2010/124907
- US-A- 3 888 111

## Description

### Field of Invention

The present invention relates to a method of leak testing a component and to a leak testing apparatus.

### Background

Components which contain liquid or gas and cannot be permitted to leak by more than a certain threshold amount may be subject to leak testing to assess the integrity of the components. Components that, in use, contain a functional fluid can be subject to leak testing after being filled with the functional fluid. Leak testing a component prior to providing the functional fluid is undesirable because the state of the integrity of the components could change between the leak test and providing the functional fluid. Components from a wide variety of applications may be subject to leak testing, for example medical vials and batteries. The sensitivity of conventional leak testing apparatus is relatively limited, particularly when the component is filled with a functional fluid. This is undesirable because even very small leaks may be hazardous if the liquid contained in the component is toxic. In addition, the presence of a leak may allow ingress of fluid into a component, and this may cause contamination of the fluid in the component. This is particularly undesirable if the component is a medical vial (or other container) which contains a medical fluid.

The document WO2010124907 discloses a method for checking the tightness of a container filled with a fluid, in which a fluid component exiting the container is detected by using a sensor responding to the fluid component. The container is located in a closed chamber, in which the exiting fluid component is collected over a predetermined period of time by applying a vacuum to the chamber. At the end of the period of time, a carrier gas flow is conducted through the chamber in order to supply the collected fluid component to the sensor.

It is an object of the present invention to provide leak testing which addresses the problem above or another problem associated with the prior art.

### Summary of Invention

Aspects of the present invention are defined by the appended independent claims. Preferred embodiments of the present invention are defined by the appended dependent claims.

### Brief Description of the Drawings

Embodiments of the present invention will now be described, by way of example only, with reference to the accompanying Figures, in which:
Figure 1 schematically depicts a leak testing apparatus in accordance with an embodiment of the present invention;
Figure 2 schematically depicts a leak testing apparatus in accordance with a modified embodiment of the present invention;
Figure 3 is a flow chart of a method of control of a first stage of operation of a fluid detection device of Figure 1 or Figure 2;
Figure 4 schematically depicts the leak testing apparatus of Figure 2 during the first stage of operation;
Figure 5 is a flow chart of a method of control of a second stage of operation of a fluid detection device of Figure 1 or Figure 2;
Figure 6 schematically depicts the leak testing apparatus of Figure 2 during the second stage of operation;
Figure 7 schematically depicts a leak testing apparatus in accordance with a further modified embodiment of the present invention;
Figure 8 depicts a junction between two conduits of the leak testing apparatus of Figure 7; and
Figure 9 schematically depicts a leak testing apparatus in accordance with a further modified embodiment of the present invention.

### Detailed Description

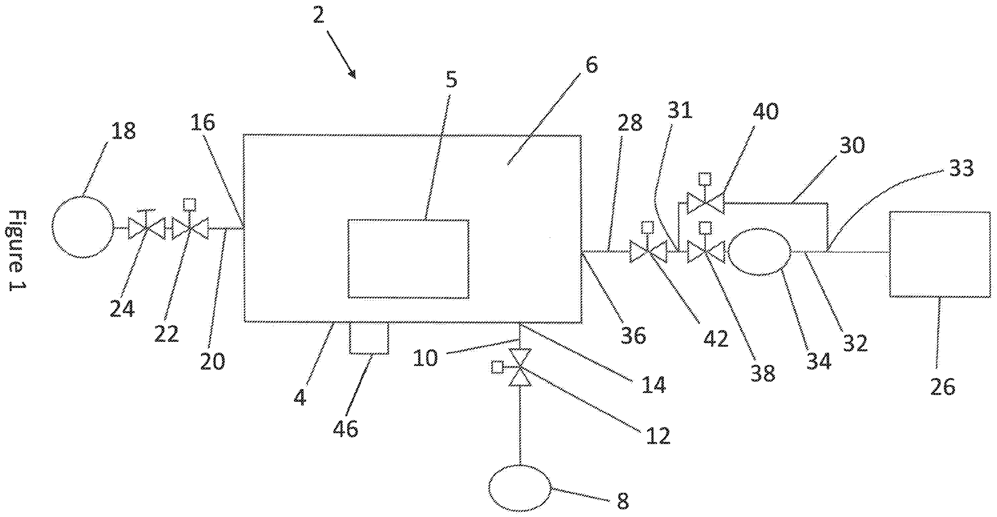

Figure 1 schematically depicts a leak testing apparatus 2 in accordance with an embodiment of the present invention. The leak testing apparatus 2 comprises a vessel 4. In use, the vessel 4 receives a component 5 that is to be leak tested. The leak testing apparatus 2 can be used to assess whether the component 5 has a leak. In particular, the leak testing apparatus 2 is capable of leak testing fluid containing components. That is to say, components can be tested with a functional fluid contained within the component. The functional fluid being a fluid contained within the component 5 that allows the component to serve a purpose or perform a function by or for an end user of the component. For example, the leak testing apparatus 2 may be used to assess whether fluid containing components such as batteries, medicine vials and/or pre-filled syringes, have a leak. In other words, the leak testing apparatus 2 may be used to assess whether a fluid containing component has an opening through which fluid may leak. It will be appreciated that a leak may result in fluid leaking into and/or out of a component. The opening may be equal to or less than 5 microns across. The opening may be equal to or less than 2 microns across.

The vessel 4 defines a chamber 6. The chamber 6 is the internal volume that is defined by the vessel 4. The vessel 4 may be any suitable vessel that allows the chamber 6 to be sealed from the external environment. It will, however, be appreciated that the chamber 6 may be in fluid communication with the external environment via one or more components of the leak testing apparatus.

The leak testing apparatus 2 further comprises a vacuum pump 8. The term 'vacuum pump' may be understood to refer to any pump that is suitable to reduce the pressure of fluid in the chamber 6. The vacuum pump 8 may for example be a centrifugal pump, rotary vane pump, scroll pump or diaphragm pump. The vacuum pump 8 be referred to as a 'rough pump' (so called because of the high flow capacity of the pump). An inlet of the vacuum pump 8 is connected to the chamber via a first conduit 10. The first conduit 10 extends from a first fluid outlet 14 of the vessel 4 to the inlet of the vacuum pump 8. This allows the flow of fluid from the chamber 6 through the first conduit 10 to the vacuum pump 8. An outlet (not shown in Figure 1 due to the schematic representation of the leak testing apparatus 2) of the vacuum pump 8 is in fluid communication with an external volume (not shown in Figure 1). The external volume may be a vessel or container, or may be the external environment. When the vacuum pump 8 is operating, fluid is pumped from the chamber 6 to the external volume via the first conduit 10 and the vacuum pump 8. This reduces the pressure of fluid in the chamber 6.

The first conduit 10 is provided with a first isolation valve 12. The first isolation valve 12 is located between the first fluid outlet 14 of the vessel 4 and the inlet of the vacuum pump 8. That is to say, the first isolation valve 12 is located upstream of the inlet of the vacuum pump 8. Although the first conduit 10 is provided in two sections, i.e. a first section extending between the first fluid outlet 14 and the first isolation valve 12 and a second section extending between the first isolation valve and the inlet of the vacuum pump 8, the first conduit is referred to as a single component. This principle also applies to the other conduits of the leak testing apparatus 2, which will be introduced below. Any suitable type of valve may be used for the first isolation valve 12. For example, the first isolation valve 12 may be a rocker valve, bellows sealed vacuum valve, non-bellows sealed vacuum valve, butterfly valve, gate valve or a diaphragm valve. The first isolation valve 12 may be electromechanically or pneumatically controllable. The first isolation valve 12 may be a solenoid valve.

When in an open position, the first isolation valve 12 allows the flow of fluid. When in a closed position, the first isolation valve 12 prevents the flow of fluid. This principle applies to the other isolation valves of the leak testing apparatus 2 that will be introduced below. Therefore, the first isolation valve 12 allows the vacuum pump 8 to be isolated from the chamber 6.

The vessel 4 comprises a carrier fluid inlet 16. The leak testing apparatus 2 further comprises a carrier fluid vessel 18. The carrier fluid vessel 18 contains a carrier fluid. The fluid contained in the carrier fluid vessel 18 is pressurised. The carrier fluid that is contained within the carrier fluid vessel 18 may be any suitable fluid. The carrier fluid may be a carrier gas. The carrier gas may be, for example, nitrogen, carbon dioxide, or dry air. An outlet (not shown in Figure 1 due to the schematic representation of the leak testing apparatus 2) of the carrier fluid vessel 18 is connected to the carrier fluid inlet 16 via a second conduit 20. Therefore, the outlet of the carrier fluid vessel 18 is in fluid communication with the chamber 6. The second conduit 20 extends from the outlet of the carrier fluid vessel 18 to the carrier fluid inlet 16.

The second conduit 20 is provided with a second isolation valve 22. The second isolation valve 22 may be any suitable type of valve. For example, the second isolation valve 22 may be a rocker valve, bellows sealed vacuum valve, non-bellows sealed vacuum valve, butterfly valve, gate valve or a diaphragm valve. The second isolation valve 22 may be electromechanically or pneumatically controllable. The second isolation valve 22 may be a solenoid valve. The second isolation valve 22 allows the carrier fluid vessel 18 to be isolated from the chamber 6.

A first regulator valve 24 is also provided to the second conduit 20. The first regulator valve 24 may be any suitable type of valve. For example, the first regulator valve may be a needle valve or a butterfly valve. The first regulator valve 24 may be electromechanically, pneumatically, or manually controllable. The purpose of the first regulator valve 24 is to set the rate at which the carrier fluid flows from the carrier fluid vessel 18 into the chamber 6. In the present embodiment, the degree to which the first regulator valve 24 is open is set prior to commencement of a leak test and remains unchanged throughout the test. However, in other embodiments, the first regulator valve 24 can be used to modulate the flow of fluid through it during a test by varying the degree to which it is open. Modulation of the first regulator valve 24 varies the rate at which fluid can flow through the first regulator valve. This principle applies to the other regulator valve of the leak testing apparatus, which will be introduced below.

The first regulator valve 24 is located between the second isolation valve 22 and the outlet of the carrier fluid vessel 18. That is to say, the first regulator valve 24 is located downstream of the outlet of the carrier fluid vessel 18 and upstream of the second isolation valve 22. In other, non-depicted, embodiments, the first regulator valve may be located downstream of the second isolation valve. That is to say, the second isolation valve may be located between the outlet of the carrier fluid vessel and the first regulator valve.

The leak testing apparatus 2 further comprises a fluid detection device 26. The fluid detection device 26 may be, for example, a mass spectrometer. The fluid detection device 26 is able to monitor a fluid flowing through the fluid detection device for the presence of one or more fluids, as will be discussed in more detail below. The fluids detected by the fluid detection device 26 may be a gas, a vapour and/or a liquid. An inlet (not shown in Figure 1 due to the schematic representation of the leak testing apparatus 2) of the fluid detection device 26 is in fluid communication with the chamber 6. The fluid detection 26 device comprises a pump (not shown in the figures). This allows the fluid detection device 26 to pump fluid from the chamber 6 to the inlet of the fluid detection device.

The fluid detection device 26 further comprises a pressure gauge (not shown in the figures). This allows the fluid detection device 26 to take readings of the pressure of the fluid passing through it and pass this data to a user and/or to a controller, as will be discussed in more detail below.

The inlet of the fluid detection device 26 is in fluid communication with the chamber 6 via a third conduit 28. The third conduit 28 connects to the vessel 4 at a second fluid outlet 36. A bypass conduit 30 is provided that bypasses a portion of the third conduit 28. The bypass conduit 30 may also be referred to as a bypass line. The bypass conduit 30 is connected to the third conduit 28 at a first junction 31 and a second junction 33. The second junction 33 is located downstream of the first junction 31. The portion of the third conduit 28 that is bypassed by the bypass conduit may be referred to as a direct portion 32 of the third conduit 28. Therefore, the direct portion 32 is the portion of the third conduit 28 that is located between the first junction 31 and the second junction 33.

A second pump 34 is provided to the third conduit 28. The second pump 34 may be referred to as a fine pump. This is because the capacity of the second pump 34 is lower than that of the vacuum pump 8. The second pump 34 is located between the first junction 31 and the second junction 33. An inlet (not shown in Figure 1 due to the schematic representation of the leak testing apparatus 2) of the second pump 34 is connected to the vessel 4 via the third conduit 28. An outlet (not shown in Figure 1 due to the schematic representation of the leak testing apparatus 2) of the second pump 32 is connected to the fluid detection device 26 via the third conduit 28. Therefore, the second pump 34 is able to pump fluid from the chamber 6 and through the fluid detection device 26. The second pump 34 is configured such that the pressure and velocity of the fluid that flows out of the second pump matches the requirements of the fluid detection device 26, as will be discussed in more detail below.

A third isolation valve 38 is provided to the direct portion 32 of the third conduit 28. The third isolation valve 38 is located upstream of the second pump 34 and downstream of the first junction 31. Flow of fluid through the direct portion 32 is prevented by the third isolation valve 38 when the third isolation valve is in the closed position. The third isolation valve 38 may be any suitable type of valve. For example, the third isolation valve 38 may be a rocker valve, bellows sealed vacuum valve, non-bellows sealed vacuum valve, butterfly valve, gate valve or a diaphragm valve. The third isolation valve 38 may be electromechanically or pneumatically controllable. The third isolation valve 38 may be a solenoid valve.

A fourth isolation valve 40 is provided to the bypass conduit 30. The fourth isolation valve 40 is located downstream of the first junction 31 and upstream of the second junction 33. Flow of fluid through the bypass conduit 30, i.e. from the first junction 31 to the second junction 33, is prevented by the fourth isolation valve 40 when the fourth isolation valve is in the closed position. The fourth isolation valve 40 may be any suitable type of valve. For example, the fourth isolation valve 40 may be a rocker valve, bellows sealed vacuum valve, non-bellows sealed vacuum valve, butterfly valve, gate valve or a diaphragm valve. The fourth isolation valve 40 may be electromechanically or pneumatically controllable. The fourth isolation valve 40 may be a solenoid valve.

A second regulator valve 42 is provided to the third conduit 28. The second regulator valve 42 is configured to modulate the flow of fluid through the third conduit 28 (and through the bypass conduit 30 when the fourth isolation valve 40 is open). The second regulator valve 42 is located upstream of the first junction 31. The second regulator valve 42 is located downstream of the second fluid outlet 36 of the vessel 4. The second regulator valve 42 may be any suitable type of valve. For example, the second regulator valve 42 may be a high-speed valve. For example, the second regulator valve 42 may be a butterfly valve. The second regulator valve 42 may be electromechanically or pneumatically controllable. The second regulator valve 42 may be a solenoid valve.

The leak testing apparatus 2 further comprises a pressure gauge 46. The pressure gauge 46 allows the pressure of the fluid in the vessel 4 to be determined. The pressure gauge 46 may be digital or analogue.

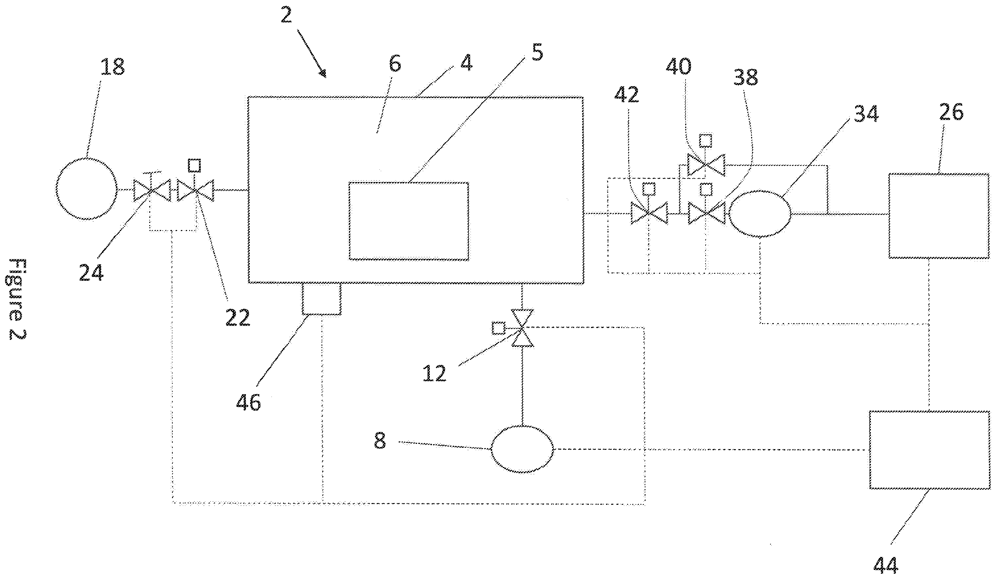

Figure 2 schematically depicts the leak testing apparatus of Figure 1, but now also depicts a controller 44 (this was omitted from Figure 1 in order to avoid over complicating Figure 1). Components of the leak testing apparatus 2 are able to communicate with the controller 44. The controller 44 allows the leak testing apparatus 2 to, after an initial setup by a user, automatically leak test a component 5. In Figure 2, communication channels between the controller 44 and the components of the leak testing apparatus 2 are represented with dashed lines. In use, the controller 44 is configured to control the operation of the leak testing apparatus based on control algorithms, data relating to conditions sensed by the fluid detection device and/or feedback received from the components of the leak testing apparatus.

Operation of the leak testing apparatus 2 will now be discussed. Operation may be controlled by the controller 44. Alternatively, operation may be controlled by a user (for example if no controller is present). Operation of the leak testing apparatus 2 generally comprises two stages. The first stage of operation is an evacuation and transient fluid monitoring stage. The second stage of operation is a steady state fluid monitoring stage. As discussed above, the component 5 being tested with the leak testing apparatus 2 can contain a functional fluid during operation of the leak testing apparatus. The functional fluid may be, for example, the electrolyte fluid of a battery, or medicine contained within a vial or pre-filled syringe. If the component 5 does leak during the leak test operation, the functional fluid will vaporise upon exiting the component. This is due to the low pressure of the chamber 6. The vaporised fluid can be referred to as a 'tracer fluid'.

The vacuum pump 8 and the second pump 34 may be active throughout operation of the leak testing apparatus 2. Whether or not fluid flows through the vacuum pump 8 or the second pump 34 is dependent upon the position of the first isolation valve 12 and the third isolation valve 38 respectively. When the vacuum pump 8 or the second pump 34 is in fluid communication with the chamber 6 (i.e., because the first isolation valve or the third isolation valve 38 is open), that pump is said to be operating.

The position of the first regulator valve 24, i.e., the degree to which the first regulator valve is open, is generally set prior to commencing a leak test. The position of the first regulator valve 24 is set such that the pressure at which the carrier fluid is provided to the chamber 6 corresponds with the pressure required to vaporise the functional fluid of the component 5. If the pressure at which the carrier fluid is supplied is too high, the pressure of the fluid inside the chamber may be be too high to allow vaporisation of the functional fluid of the component 5. If the pressure at which the carrier fluid is supplied is too low, the pressure of the fluid in the chamber 6 may not be sufficiently high to allow the fluid in the chamber to be pumped out by the second pump 34. In some embodiments, the position of the first regulator valve may be varied by the controller 44 during leak testing.

The pumping speed of the second pump 34 may be set prior to commencement of the test such that the speed of the flow of fluid through the fluid detection device 26 is optimal. The pumping speed of the second pump 34 may also be set based upon at least the pressure that the carrier fluid is supplied to the chamber 6. If the pumping speed of the second pump 34 is too high, the pressure of the fluid in the chamber 6 falls. This would impair the ability of the second pump 34 to pump fluid from the chamber 6 and through the fluid detection device 26. As a result, the results of the leak test would be impaired. If the pumping speed of the second pump 34 is too low, an insufficient amount of fluid would pass through the fluid detection device 26 and, again, the results of the leak test would be flawed. The pumping speed of the second pump 34 may be selected such that a sufficient amount of fluid is passed through the fluid detection device 26 and that the pressure of the fluid in the chamber 6 is stable.

The pump of the fluid detection device 26 is also active throughout operation of the leak testing apparatus. Whether or not the fluid detection device 26 is able to pump fluid from the chamber 6 and through itself is dependent upon the position of the third and/or fourth isolation valves 38, 40 and of the second regulator valve 42. If the second regulator valve 42 is at least partially open and either of the third or fourth isolation valves 38, 40 are open, then the fluid detection device 26 is said to be operating because it is in fluid communication with the chamber 6.

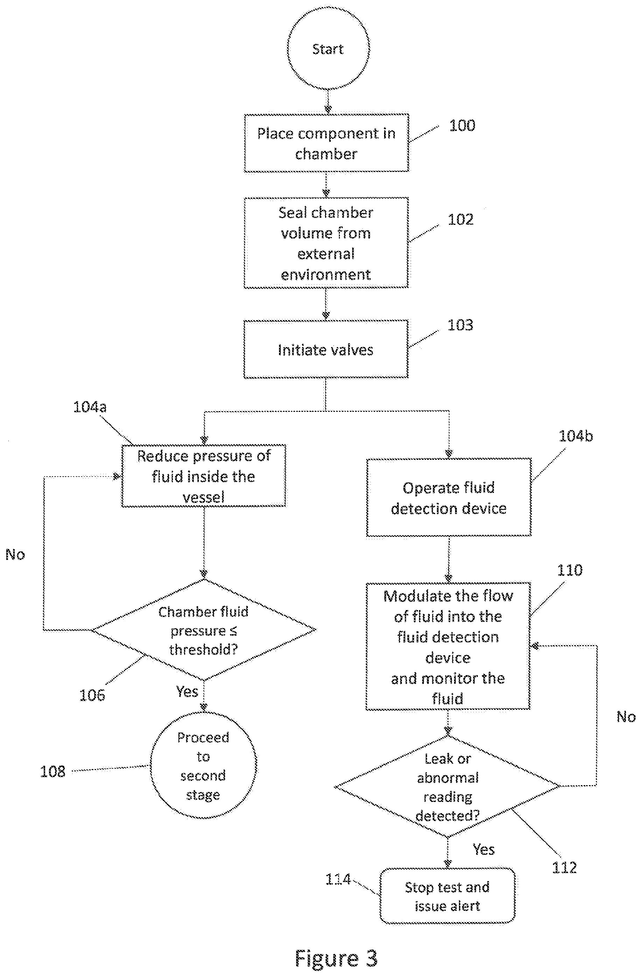

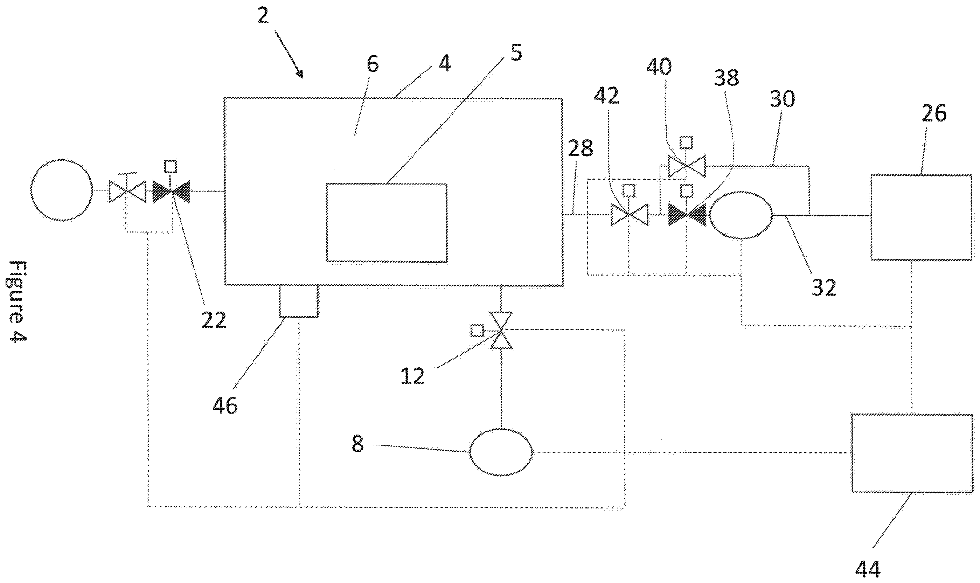

The first stage of operation will now be discussed with reference to Figures 3 and 4. Prior to commencing a leak test, all of the valves of the leak testing apparatus 2, excluding the first regulator valve 24, are in the closed position.

At step 100, the component 5 is positioned in the vessel 4 by a user. At step 102, the user seals the chamber 6 from the external environment, for example, by closing a lid (not shown in Figure 3 due to the schematic depiction of the leak testing apparatus 2) of the chamber 4. At step 103, the valves of the leak testing apparatus 2 are initiated. During initiation, the controller 44 sends a signal to the first isolation valve 12, the fourth isolation valve 40 and the second regulator 42 to open those valves. Figure 4 depicts the leak testing apparatus 2 after step 103. In Figure 4, valves that are in a closed configuration after step 103 are shown with a solid fill and valves that are in an open configuration are shown with no fill.

The operation then continues to steps 104a and 104b which occur simultaneously (this is the start of the evacuation and fluid monitoring stage). At step 104a, the pressure of the fluid inside the vessel 4 is reduced. The first isolation valve 12 is open at this stage in operation, as discussed above. Therefore, the vacuum pump 8 is able to pump fluid from the chamber 4 to an external volume (not shown in the Figures). This pumping action of the vacuum pump 8 reduces the pressure of the fluid in the chamber 6. At step 106, the controller 44 assesses whether the pressure of the fluid in the chamber 6 is less than or equal to a threshold value. To do this, the controller 44 compares pressure data received from the pressure gauge 46 against the threshold value. If the pressure of the fluid in the chamber 6 is greater than the threshold value, operation of the vacuum pump 8 continues. If the pressure of the fluid in the chamber 6 is less than or equal to the threshold value, the operation proceeds to step 108, at which point the operation proceeds to the second stage of operation (the steady state leak detection stage). The threshold value may be based upon the pressure, or other characteristic, of the functional fluid of the component 5. The threshold pressure is less than the pressure of the functional fluid of the component 5. The pressure differential between the pressure of the functional fluid of the component 5 and the threshold pressure of the fluid in the chamber 6 may be, for example, 1mbar.

At step 104b, the fluid detection device 26 is operated. This is by virtue of the opening of the fourth isolation valve 40 and of the second regulator valve 42, discussed above. The fluid detection device 26 is then able to pump fluid from the chamber 6. Since the third isolation valve 38 is closed at this stage, the direct portion 32 of the third conduit 28 is isolated from the chamber 6 and so fluid is pumped to the fluid detection device 26 via the bypass conduit 30. As discussed above, the fluid detection device 26 comprises a pump that pumps fluid from the chamber 6 to the inlet of the fluid detection device and through the fluid detection device. In some embodiments, the fluid can be pumped to the fluid detection device 26 via the direct portion 32 of the direct conduit 28. In such an embodiment, the second pump 34 may or may not be activated. That is to say, the fluid in the chamber 6 is can be pumped to the fluid detection device 26 via the direct portion 32 by the pumping action of the second pump 34 and/or the pumping action of the fluid detection device 26. In these embodiments, the bypass conduit 30 need not be provided.

While the fluid detection device 26 is operating, the operation proceeds to step 110. At step 110, the flow of fluid into the fluid detection device 26 is modulated. The flow of fluid into the fluid detection device 26 is modulated using the second regulator valve 42. Modulation using the second regulator valve 42 refers to the varying of the rate of the flow of fluid into the fluid detection device 26. This can be achieved by varying the degree to which the second regulator valve 42 is open. To do this, the controller 44 receives data from the pressure gauge 46 of the chamber 4 and from the pressure gauge of the fluid detection device 26. The controller 44 then sends a signal to the second regulator valve 42 to vary the degree to which the second regulator valve is open such that the pressure of fluid that is being passed through the fluid detection device 26 generally matches the pressure of the fluid in the chamber 6. Therefore, as the pressure of the fluid in the chamber 6 decreases, the degree to which the second regulator valve 42 is open increases. In some embodiments, the pressure of the fluid flowing through the fluid detection device 26 may be within 5% of the fluid in the chamber 6.

Modulating the flow of fluid into the fluid detection device 26 reduces the likelihood that the fluid detection device 26 becomes saturated with the fluid from the chamber 6. Saturation of the fluid detection device 26 causes delays because it is necessary to wait for the fluid detection device to clear before commencing further leak tests. In addition, this prevents the pressure of the fluid that is passing through the pump of the fluid detection device 26 from building up. A build-up of pressure of the fluid in the pump of the fluid detection device 26 can cause the pump to fail, which is undesirable as permanent damage to the fluid detection device may occur as a result.

Also at step 110, the fluid detection device 26 monitors the fluid flowing through it for the presence of the functional fluid. The data obtained through the monitoring of the fluid passing through the fluid detection device 26 is sent to the controller 44. This data is then assessed at step 112 to determine whether a leak or abnormal reading is detected. If no leak or abnormal reading is detected, the operation returns to step 110. If a leak or abnormal reading is detected, operation proceeds to step 114. At step 114, the controller stops operation of the leak testing apparatus 2 and issues an alert to the user. Whichever of steps 108 and 112 occurs first takes precedence.

Advantageously, the fluid detection device 26 monitors the fluid that is passing through it while the vacuum pump 8 is operating (evacuation and fluid monitoring occur simultaneously). This means that the fluid detection device 26 is able to detect an abnormal background fluid and/or a leak of fluid from the component 5 being tested earlier in the testing process. This is compared to if the fluid detection device was only operated once the pressure of the fluid in the chamber 6 had been reduced to a predetermined value.

The term 'background fluid' refers to the fluid that is present inside the vessel 4 prior to commencing operation of the leak testing apparatus 2. An abnormal background fluid may be caused by, for example, a spill of fluid on an internal surface of the vessel 4. An abnormal background fluid gives rise to an abnormal background reading. That is, the reading obtained by the monitoring of the fluid from the chamber 6 with the fluid detection device 26 while the vacuum pump 8 is operating.

The component 5 being tested may begin to leak a fluid prior to the pressure of the fluid in the chamber 6 reaching the threshold value. Therefore, since the fluid detection device 26 is able to monitor the fluid from the chamber 6 while the vacuum pump 8 is operating, component leaks can be identified earlier compared to if the fluid detection device were isolated from the chamber until the predetermined pressure of the fluid in the chamber had been reached.

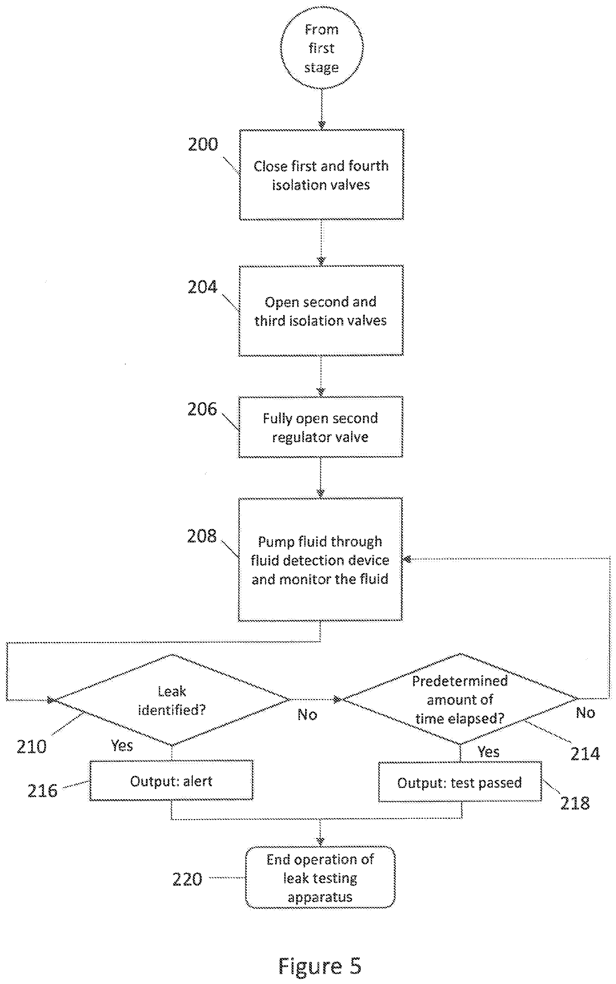

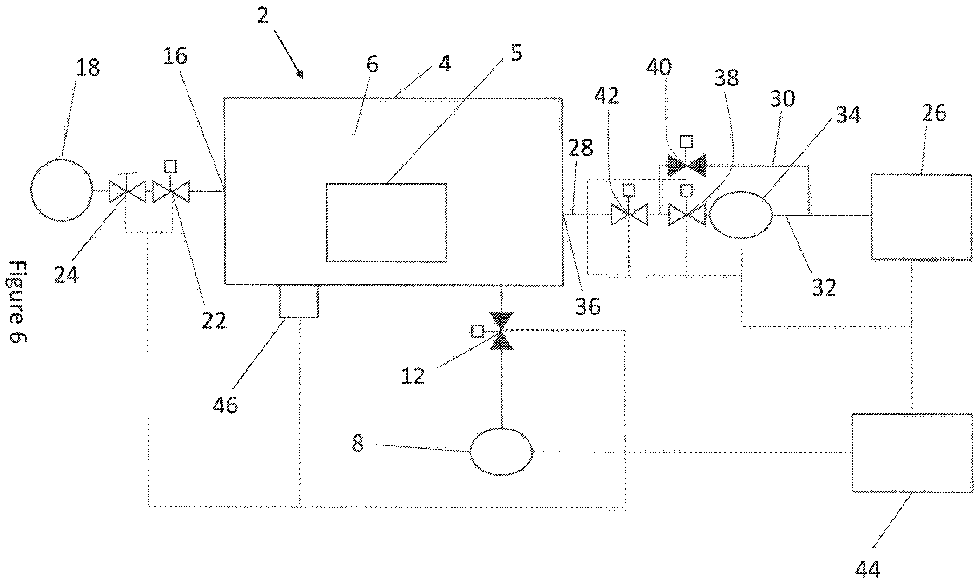

The second stage of operation of the leak testing apparatus 2 will now be discussed with reference to Figures 5 and 6. At step 200, the controller 44 sends a signal to the first and fourth isolation valves 12, 40 to close those valves. Next, at step 204, the controller 44 sends a signal to the second and third isolation valves 22, 38 to open those valves. Once the second isolation valve 22 is open, the carrier fluid of the carrier fluid vessel 18 will begin to flow into the chamber 6. This is because the pressure of the carrier fluid is greater than the pressure of the fluid in the chamber 6.

Next, at step 206, the controller 44 sends a signal to the second regulator valve 42 to move the second regulator valve to the fully open position. Figure 6 depicts the leak testing apparatus 2 after step 206 has been performed. In Figure 6, valves that are in a closed configuration during the second stage of operation are shown with a solid fill and valves that are in an open configuration are shown with no fill. As can be seen, the first and fourth isolation valves 12, 40 are in the closed position and the second and third isolation valves 22, 38 and the first regulator valve 24 are in the open position. Since the fourth isolation valve 40 is in the closed position, flow of fluid through the bypass conduit 30 is prevented.

The operation of the leak testing apparatus 2 then proceeds to step 208. At step 208, fluid is pumped through the fluid detection device 26. This is by virtue of the third isolation valve 38 and the second regulator valve 42 being open. Therefore, the second pump 34 operates during step 208. The second pump 34 pumps fluid from the chamber 6 through the second fluid outlet 36, the third conduit 28, via the direct portion 32, and through the fluid detection device 26. Passing the fluid from the chamber 6 through the fluid detection device 26 allows the fluid detection device to monitor the fluid for the presence of the functional fluid of the component 5. Data relating to the monitoring of the fluid passing through the fluid detection device 26 is then sent from the fluid detection device to the controller 44. The data relating to the monitoring of the fluid from the chamber 6 will include the results that are caused by the carrier fluid. Advantageously, since the characteristics of the carrier fluid are known, the results that correspond with the carrier fluid can be disregarded from the data, allowing simple identification of a leak from the component 5.

As discussed above, the position of the first regulator valve 24 is generally set prior to commencing a leak test. However, step 208 may also include modulating the flow rate of carrier fluid into the chamber 6. The flow rate of fluid through the second pump 34 is measured and the data is sent to the controller 44. The controller 44 then controls the first regulator valve 24 to adjust the flow rate of carrier fluid into the chamber 6 based on the flow rate of the fluid from the chamber through the second pump 34. The flow of carrier fluid through the first regulator valve 24 and into the chamber 6 can be modulated (i.e. adjusted) such that the product of the pressure and the velocity of the carrier fluid at the carrier fluid inlet 16 is within 5% of the product of the pressure and the velocity of the fluid that flows through the second fluid outlet 36. In some embodiments, the product of the pressure and the velocity of the carrier fluid at the carrier fluid inlet 16 generally matches the product of the pressure and the velocity of the fluid that flows through the second fluid outlet 36.

Operation then proceeds to step 210. Step 210 occurs simultaneously with step 208. At step 210, the controller 44 uses the data relating to the monitoring of the fluid from the chamber 6 to determine whether the component 5 being tested is leaking fluid. If a leak is identified, operation proceeds to step 220, which ends operation of the leak testing apparatus 2. Upon detection of a leak, the controller 44 sends a signal to the third isolation valve 38 to close the third isolation valve. This protects the fluid detection device from being saturated by the leaked fluid. The controller 44 sends the data obtained during the test to a user interface (not shown in the Figures) to allow the data to be viewed by a user. The data obtained during the test may include data obtained from the fluid detection device 26, from the pressure gauge 46, the time elapsed during the test, the date of the test and/or information allowing the component(s) being tested to be identified (such as a batch number). The data may also include a leak rate of the component(s) 5. The leak rate being the rate at which the functional fluid is egressing out of the component. The data may include an alert 216 that a leak has been identified.

If a leak is not identified during step 210, operation proceeds to step 214. At step 214, the controller 44 determines whether a predetermined amount of time has elapsed. If the predetermined amount of time has elapsed, operation proceeds to step 220 to end operation of the leak testing apparatus 2. Again, the controller 44 then sends the data obtained by the fluid detection device 26 during the test to a user interface to allow the data to be viewed by a user. The data may include an output 218 to identify that the leak test has been passed. If the predetermined amount of time has not elapsed, step 208 continues. The predetermined amount of time may be less than or equal to 10 seconds. The predetermined amount of time may be less than or equal to 5 seconds.

Since the component 5 being tested contains a functional fluid, if the component has a defect (not shown in the Figures) through which fluid can flow, the fluid that is contained by the component will be drawn through the defect and into the chamber. This is because the pressure in the chamber 6 is less than the pressure of the fluid that is contained within the component 5 being tested. As a result, the fluid that is contained within the component diffuses from the component and into the chamber 6, via the defect. Once the leaked fluid enters the chamber 6, it is vaporised because of the reduced pressure of the fluid in the chamber. The vapour may be referred to as a tracer gas or tracer vapour. Since a carrier fluid is supplied to the chamber 6, the leaked fluid mixes with the carrier fluid and the mixture is transported to the fluid detection device 26 by the second pump 34. In the absence of the carrier fluid, the leaked fluid may not be in sufficient abundance to be transported to the fluid detection device 26 by the second pump 34. Therefore, the supply of carrier fluid to the chamber 6 increases the total abundance of fluid in the vessel 4, allowing the fluid in the chamber to be transported to the fluid detection device 26. The supply of carrier fluid therefore advantageously allows the detection of smaller leaks compared to a leak testing apparatus that does not supply a carrier fluid during leak detection.

The component 5 may be any component that contains a fluid in its normal configuration. The component may be, for example, a battery or a pre-filled syringe. Operation of the leak testing apparatus 2 is not limited to testing a single component at a time. It is possible to place multiple components in the chamber for testing. This increases the throughput (i.e. the total number of components that can be tested in a given time period) of the leak testing apparatus 2. Testing multiple components at once may be particularly advantageous where it is known that the likelihood of a component having a leak is low. For example, this may be suitable where approximately one in one thousand components or more is expected to have a leak.. If a leak is detected when testing multiple components at once, the components can then be tested individually to assess which component(s) have a leak.

It will be appreciated that the first stage of operation can be performed independent of the second stage of operation. It will also be appreciated that the second stage of operation can be performed independent of the first stage of operation. That is to say, a leak detection apparatus can perform fluid monitoring and evacuation simultaneously without then supplying a carrier fluid to a chamber of the leak detection apparatus. Similarly, a leak detection apparatus can supply a carrier fluid during a steady state fluid monitoring stage, without having performed fluid monitoring during an evacuation stage.

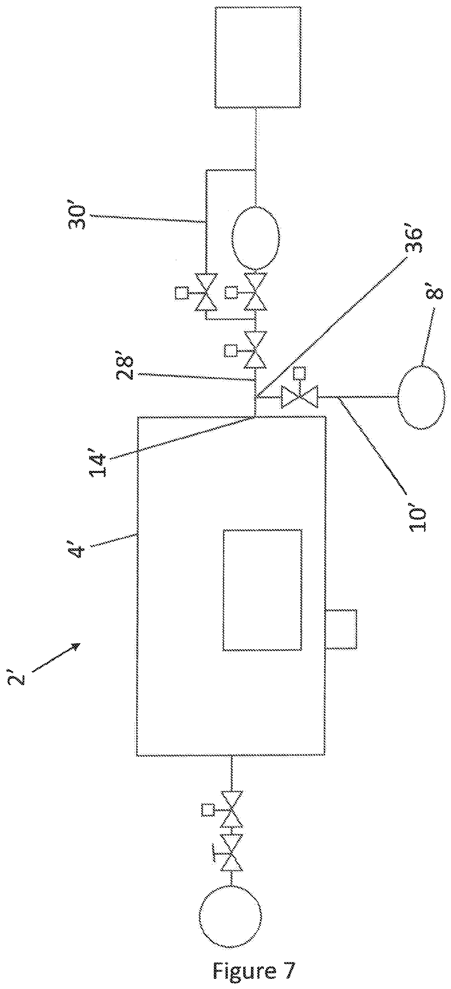

An alternative embodiment of a leak testing apparatus 2' is shown in Figure 7. The leak testing apparatus 2'is almost identical to the leak testing apparatus 2, with the exception that the third conduit 28' is connected to the first conduit 10'. In this embodiment, the second fluid outlet 36' is defined at the junction between the first conduit 10' and the third conduit 28'. Therefore, the second fluid outlet 36' is located downstream of the first fluid outlet 14'. In this embodiment, the first conduit 10' is connected to the vessel 4' and the third conduit 28' is connected to the first conduit. It will be appreciated that this configuration can also be used in reverse. That is to say, the third conduit 28' can be connected to the vessel 4' and the first conduit 10' can be connected to the third conduit 28'. In such an embodiment, the first conduit 10' can be connected to the third conduit 28' at any point along the third conduit, including the bypass conduit 30'.

Although not depicted, the leak testing apparatus 2' further comprises a controller that is in communication with the components, in particular the valves and pumps, of the leak testing apparatus. The method of operation of the leak testing apparatus 2' shown in Figure 7 is the same as has been described with reference to the previous embodiment, described above. In this embodiment, the vacuum pump 8' pumps fluid from the vessel 6' to an external environment, via the second fluid outlet 36', the third conduit 28', the first conduit 10' and the first isolation valve 12'.

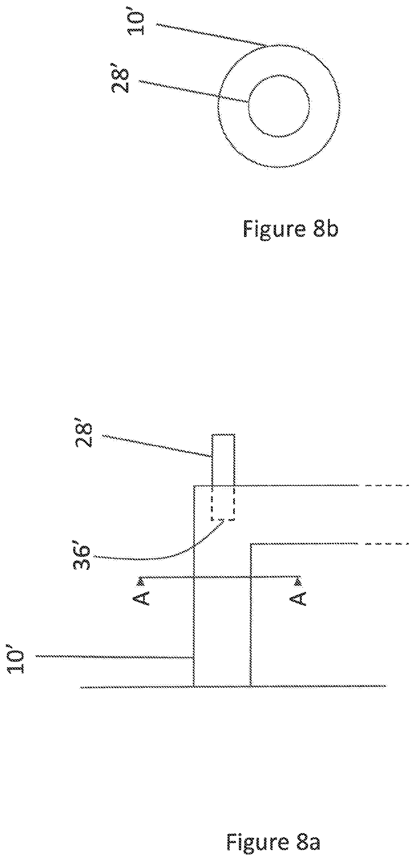

Figure 8a shows the junction between the first conduit 10' and the third conduit 28'. As can be seen, the third conduit 28' is connected to the first conduit 10'. The third conduit 28' extends into the first conduit 10'. Therefore, in this embodiment, the second fluid outlet 36' is located within the first conduit 10'. Figure 8b shows a cross-sectional view taken through section A-A of Figure 8a. As can be seen, the diameter of the third conduit 28' is less than the diameter of the first conduit 10'. In embodiments where the third conduit 28' is connected to the vessel 4' and the first conduit 10' is connected to the third conduit, the diameter of the third conduit may be greater than the diameter of the first conduit.

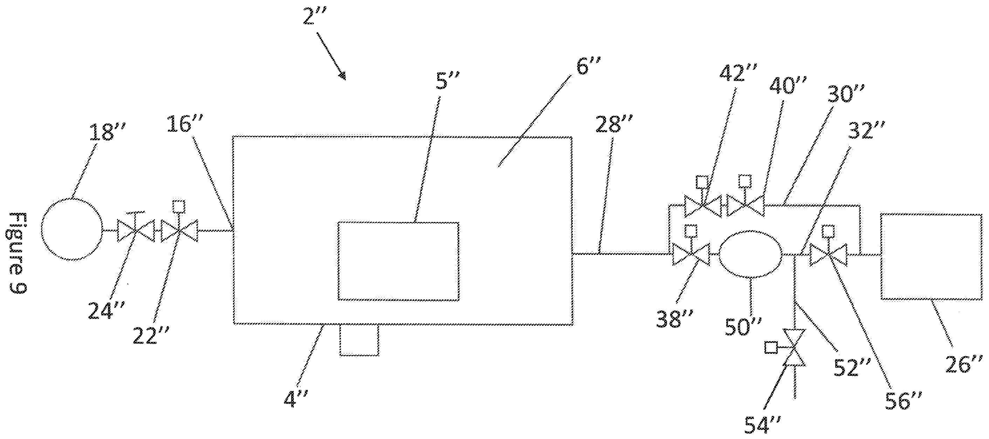

Figure 9 shows a further alternative embodiment of the leak testing apparatus 2". The leak testing apparatus 2" comprises a pump 50". The pump 50" is the only pump of the leak testing apparatus 2". The pump 50" therefore serves the purpose of both the vacuum pump and the second pump of the first embodiment described above. That is to say, the pump 50" is configured to both reduce the pressure of the fluid in the chamber 6" and to pump fluid from the chamber to through the fluid detection device 26". The pump 50" may pump fluid through the fluid detection device 26" once the pressure of the fluid in the chamber 6" has reached the predetermined magnitude. The pump 50" is located at the same position as the second pump of the previous embodiments, described above.

The leak testing apparatus 2" comprises an evacuation conduit 52". The evacuation conduit 52" is connected to the third conduit 28" downstream of the pump 50". The evacuation conduit 52" is connected to the direct portion 32" of the third conduit 28". However, the evacuation conduit 52" can be connected to the third conduit 28" at any point that is downstream of the pump 50". An evacuation isolation valve 54" is provided to the evacuation conduit 52". The evacuation isolation valve 54" allows the evacuation conduit 52" to be isolated from the third conduit 28" when the evacuation isolation valve 54" is in the closed position.

The third conduit 28" is further provided with a fluid detection isolation valve 56". The fluid detection isolation valve 56"is located downstream of the point at which the evacuation conduit 52" is connected to the third conduit 28". The fluid detection isolation valve 56" is located upstream of the second junction 33". The fluid detection isolation valve 56" allows the fluid detection device 26" to be isolated from the direct portion 32" of the third conduit 28" when the fluid detection isolation valve 56" is in the closed position.

As with previous embodiments, the leak testing apparatus 2" comprises a bypass conduit 30" that bypasses the pump 50". The second regulator valve 42" of this embodiment is located along the bypass conduit 30". The second regulator valve 42" is located upstream of the fourth isolation valve 40". The third isolation valve 38" of this embodiment is provided to isolate the pump 50" from the chamber 6" between leak tests. Therefore, the third isolation valve 38" is in the open position between commencement and finish of a test.

During the first stage of operation of the leak testing apparatus 2", the evacuation isolation valve 54" and the fourth isolation valve 40" are in the open position. In addition, the fluid detection isolation valve 56" and the second isolation valve 22" are in the closed position. Operation of the pump 50" therefore pumps fluid out of the vessel 4" and to an external volume via the third conduit 28" and the evacuation conduit 52". While the pump 50" is reducing the pressure of the fluid in the chamber 6", the fluid detection device 26" is able to draw fluid from the chamber such that the fluid from the chamber is passed through the fluid detection device. The second regulator valve 42" modulates the flow of fluid through it such that flow of fluid to the fluid detection device is modulated.

During the second stage of operation, the evacuation isolation valve 54", the second regulator valve 42" and the fourth isolation valve 40" are in the closed position. In addition, the fluid detection isolation valve 56" and the second isolation valve 22" are in the open positon. This allows the pump 50" to pump fluid from the chamber 6" through the third conduit 28" and to the fluid detection device 26". Since the second isolation valve 22" is in the open position, carrier fluid flows into the chamber 6" from the carrier fluid vessel 18". The carrier fluid flows into the chamber 6" via the carrier fluid inlet 16". The flow rate of the carrier fluid into the chamber 6" is set using the first regulator valve 24".

The embodiment depicted in Figure 9 may be suitable where the volume of the vessel 4" is small and so is designed to test small components 5". This is because the additional pumping capacity of the vacuum pump of the previous embodiments is not required.

In some embodiments, upon detection of a leak, operation of the leak testing apparatus 2, 2', 2" may continue operation until the readings obtained with the fluid detection device 26 have stabilised. Alternatively, the leak testing apparatus 2, 2', 2" may continue operation until a predetermined amount of time has elapsed. The predetermined amount of time where a leak has been detected may be the same as the predetermined amount of time initially set for the test such that the total time taken for the test is unchanged. Alternatively, upon detection of a leak, the leak testing apparatus 2, 2', 2" may continue operation for a predetermined amount of time that commences upon detection of the leak. This may result in the leak test being longer or shorter than if a leak had not been detected.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A method of leak testing a component (5) containing a functional fluid, the method comprising:
positioning the component within a vessel (18), the vessel defining a chamber (6);
reducing the pressure of a fluid in the chamber;
supplying a carrier fluid to the chamber and simultaneously pumping fluid from the chamber through a fluid detection device (26); and
using the fluid detection device to monitor for the presence of the functional fluid;
**characterized in that**
the product of the pressure and the velocity of the supply of carrier gas is within 5% of the product of the pressure and the velocity of the fluid at the fluid detection device.

2. The method of claim 1, wherein the product of the pressure and the velocity of the supply of carrier gas generally matches the product of the pressure and the velocity of the fluid at the fluid detection device.

3. The method of claim 1 or claim 2, further comprising modulating the flow rate of fluid through the fluid detection device.

4. The method of any preceding claim, wherein the pressure of the fluid in the chamber is reduced using a vacuum pump (8).

5. The method of any preceding claim, wherein the fluid is pumped through the fluid detection device using a second pump (34).

6. A leak testing apparatus (2) for leak testing a fluid containing component (5) at a reduced pressure, the apparatus comprising:
a vessel (18) that defines a chamber (6), the vessel having a carrier fluid inlet (16);
a fluid detection device (26) in fluid communication with the chamber; and
a pumping system that is configured to reduce the pressure of the fluid in the chamber and to pump fluid from the chamber through the fluid detection device;
**characterized in that**
the pumping system is configured to pump fluid from the chamber through the fluid detection device such that the product of the pressure and the velocity of the fluid at the fluid detection device is within 5% of the product of the pressure and the velocity of the fluid at the carrier fluid inlet.

7. The apparatus of claim 6, further comprising a controller (44), the controller being configured to control the components of the leak testing apparatus.

8. The apparatus of claim 6 or claim 7, further comprising a carrier fluid supply (18) that is connected to the carrier fluid inlet.

9. The apparatus of claim 8, further comprising a regulator valve (24), wherein the regulator valve is located downstream of the carrier fluid vessel and upstream of the carrier fluid inlet.

10. The apparatus of claim 7 and claim 8, wherein the controller is configured to activate the carrier fluid supply when the fluid in the chamber has reached a predetermined threshold pressure.

11. The apparatus of any of claims 6 to 10, wherein the pumping system comprises a vacuum pump (8) that is configured to reduce the pressure of the fluid in the chamber.

12. The apparatus of any of claims 6 to 11, wherein the pumping system comprises a second pump (34) that is configured to pump fluid from the chamber through the fluid detection device.

13. The apparatus of claim 11, wherein the fluid detection device is configured to draw fluid out of the chamber and monitor the fluid for the presence of the functional fluid and/or for an abnormal background reading while the vacuum pump is operating.

## Patentansprüche

1. Verfahren zur Dichtheitsprüfung einer Komponente (5), die ein Funktionsfluid enthält, wobei das Verfahren umfasst:
Positionieren der Komponente innerhalb eines Gefäßes (18), wobei das Gefäß eine Kammer (6) definiert;
Reduzieren des Drucks eines Fluids in der Kammer;
Zuführen eines Trägerfluids zu der Kammer und gleichzeitiges Pumpen von Fluid aus der Kammer durch eine Fluiddetektionsvorrichtung (26) hindurch; und
Verwenden der Fluiddetektionsvorrichtung zum Überwachen des Vorhandenseins des Funktionsfluids;
**dadurch gekennzeichnet, dass**
das Produkt aus dem Druck und der Geschwindigkeit der Trägergaszufuhr innerhalb von 5 % des Produkts aus dem Druck und der Geschwindigkeit des Fluids an der Fluiddetektionsvorrichtung liegt.

2. Verfahren nach Anspruch 1, wobei das Produkt aus dem Druck und der Geschwindigkeit der Trägergaszufuhr im Allgemeinen dem Produkt aus dem Druck und der Geschwindigkeit des Fluids an der Fluiddetektionsvorrichtung entspricht.

3. Verfahren nach Anspruch 1 oder Anspruch 2, das weiter Modulieren der Strömungsrate des Fluids durch die Fluiddetektionsvorrichtung umfasst.

4. Verfahren nach einem vorstehenden Anspruch, wobei der Druck des Fluids in der Kammer unter Verwendung einer Vakuumpumpe (8) reduziert wird.

5. Verfahren nach einem vorstehenden Anspruch, wobei das Fluid unter Verwendung einer zweiten Pumpe (34) durch die Fluiddetektionsvorrichtung gepumpt wird.

6. Dichtheitsprüfungseinrichtung (2) zum Dichtheitsprüfen einer fluidhaltigen Komponente (5) bei einem reduziertem Druck, wobei die Einrichtung umfasst:
ein Gefäß (18), das eine Kammer (6) definiert, wobei das Gefäß einen Trägerfluideinlass (16) aufweist;
eine Fluiddetektionsvorrichtung (26) in strömungstechnischer Kommunikation mit der Kammer; und
ein Pumpsystem, das konfiguriert ist, um den Druck des Fluids in der Kammer zu reduzieren und Fluid aus der Kammer durch die Fluiddetektionsvorrichtung zu pumpen;
**dadurch gekennzeichnet, dass**
das Pumpsystem konfiguriert ist, um Fluid aus der Kammer derart durch die Fluiddetektionsvorrichtung zu pumpen, dass das Produkt des Drucks und der Geschwindigkeit des Fluids an der Fluiddetektionsvorrichtung innerhalb von 5 % des Produkts des Drucks und der Geschwindigkeit des Fluids an dem Trägerfluideinlass liegt.

7. Einrichtung nach Anspruch 6, die weiter eine Steuereinheit (44) umfasst, wobei die Steuereinheit konfiguriert ist, um die Komponenten der Dichtheitsprüfungseinrichtung zu steuern.

8. Einrichtung nach Anspruch 6 oder Anspruch 7, die weiter eine Trägerfluidzufuhr (18) umfasst, die mit dem Trägerfluideinlass verbunden ist.

9. Einrichtung nach Anspruch 8, die weiter ein Regelventil (24) umfasst, wobei sich das Regelventil stromabwärts des Trägerfluidgefäßes und stromaufwärts des Trägerfluideinlasses befindet.

10. Einrichtung nach Anspruch 7 und Anspruch 8, wobei die Steuereinheit konfiguriert ist, um die Trägerfluidzufuhr zu aktivieren, wenn das Fluid in der Kammer einen vorbestimmten Schwellendruck erreicht hat.

11. Einrichtung nach einem der Ansprüche 6 bis 10, wobei das Pumpsystem eine Vakuumpumpe (8) umfasst, die konfiguriert ist, um den Druck des Fluids in der Kammer zu reduzieren.

12. Einrichtung nach einem der Ansprüche 6 bis 11, wobei das Pumpsystem eine zweite Pumpe (34) umfasst, die konfiguriert ist, um Fluid aus der Kammer durch die Fluiddetektionsvorrichtung hindurch zu pumpen.

13. Einrichtung nach Anspruch 11, wobei die Fluiddetektionsvorrichtung zum Abziehen von Fluid aus der Kammer und zum Überwachen des Fluids auf das Vorhandensein des Funktionsfluids und/oder während des Betriebs der Vakuumpumpe auf anormale Hintergrundinformationen konfiguriert ist.

## Revendications

1. Procédé d'essai d'étanchéité d'un composant (5) contenant un fluide fonctionnel, le procédé comprenant :
le positionnement du composant à l'intérieur d'un récipient (18), le récipient définissant une chambre (6) ;
la réduction de la pression d'un fluide dans la chambre ;
l'introduction d'un fluide porteur dans la chambre et, simultanément, le pompage d'un fluide depuis la chambre à travers un dispositif de détection de fluide (26) ; et
l'utilisation du dispositif de détection de fluide pour surveiller la présence du fluide fonctionnel ;
**caractérisé en ce que**
le produit de la pression et de la vitesse de l'alimentation en gaz porteur est inférieur à 5 % du produit de la pression et de la vitesse du fluide au niveau du dispositif de détection de fluide.

2. Procédé selon la revendication 1, dans lequel le produit de la pression et de la vitesse de l'alimentation en gaz porteur correspond globalement au produit de la pression et de la vitesse du fluide au niveau du dispositif de détection de fluide.

3. Procédé selon la revendication 1 ou la revendication 2, comprenant en outre la modulation du débit de fluide à travers le dispositif de détection de fluide.

4. Procédé selon une quelconque revendication précédente, dans lequel la pression du fluide dans la chambre est réduite à l'aide d'une pompe à vide (8).

5. Procédé selon une quelconque revendication précédente, dans lequel le fluide est pompé à travers le dispositif de détection de fluide à l'aide d'une seconde pompe (34).

6. Appareil d'essai d'étanchéité (2) conçu pour tester l'étanchéité d'un composant contenant un fluide (5) à une pression réduite, l'appareil comprenant :
un récipient (18) qui définit une chambre (6), le récipient présentant une entrée de fluide porteur (16) ;
un dispositif de détection de fluide (26) en communication fluidique avec la chambre ; et
un système de pompage qui est configuré pour réduire la pression du fluide dans la chambre et pour pomper du fluide depuis la chambre à travers le dispositif de détection de fluide ;
**caractérisé en ce que**
le système de pompage est configuré pour pomper du fluide depuis la chambre à travers le dispositif de détection de fluide de telle sorte que le produit de la pression et de la vitesse du fluide au niveau du dispositif de détection de fluide est inférieur à 5 % du produit de la pression et de la vitesse du fluide au niveau de l'entrée de fluide porteur.

7. Appareil selon la revendication 6, comprenant en outre un dispositif de commande (44), le dispositif de commande étant configuré pour commander les composants de l'appareil d'essai d'étanchéité.

8. Appareil selon la revendication 6 ou la revendication 7, comprenant en outre une alimentation en fluide porteur (18) qui est raccordée à l'entrée de fluide porteur.

9. Appareil selon la revendication 8, comprenant en outre une soupape de régulation (24), dans lequel la soupape de régulation est située en aval du récipient de fluide porteur et en amont de l'entrée de fluide porteur.

10. Appareil selon la revendication 7 et la revendication 8, dans lequel le dispositif de commande est configuré pour activer l'alimentation en fluide porteur lorsque le fluide dans la chambre a atteint une pression seuil prédéterminée.

11. Appareil selon l'une quelconque des revendications 6 à 10, dans lequel le système de pompage comprend une pompe à vide (8) qui est configurée pour réduire la pression du fluide dans la chambre.

12. Appareil selon l'une quelconque des revendications 6 à 11, dans lequel le système de pompage comprend une seconde pompe (34) qui est configurée pour pomper du fluide depuis la chambre à travers le dispositif de détection de fluide.

13. Appareil selon la revendication 11, dans lequel le dispositif de détection de fluide est configuré pour aspirer du fluide hors de la chambre et pour surveiller le fluide quant à la présence du fluide fonctionnel et/ou à une mesure de fond anormale pendant le fonctionnement de la pompe à vide.
